Europäisches Patentamt

European Patent Office

Office européen des brevets

(19)

(11) **EP 1 199 196 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(51) Int Cl.:
*B60G 17/015* (2006.01)     *B60G 17/052* (2006.01)

(21) Anmeldenummer: **01124634.5**

(22) Anmeldetag: **16.10.2001**

(54) **Kraftfahrzeug-Luftfedersystem mit Ultraschall-Messanordnung**

Vehicle air suspension system with ultrasound measuring arrangement

Système de suspension à air pour véhicules avec arrangement de mesure par ultrasons

(84) Benannte Vertragsstaaten:
**AT BE CH CY DE DK ES FI FR GB GR IE IT LI LU MC NL PT SE TR**

(30) Priorität: **19.10.2000 DE 10051825**

(43) Veröffentlichungstag der Anmeldung:
**24.04.2002 Patentblatt 2002/17**

(73) Patentinhaber: **ContiTech Luftfedersysteme GmbH**
**30165 Hannover (DE)**

(72) Erfinder:
• **Reck, Siegfried**
**31582 Nienburg (DE)**
• **Plett, Volker**
**30916 Langenhagen (DE)**

(74) Vertreter: **Finger, Karsten et al**
**Continental Aktiengesellschaft**
**Patente und Lizenzen**
**Postfach 169**
**30001 Hannover (DE)**

(56) Entgegenhaltungen:
**DE-A- 19 811 982**     **DE-C- 19 801 054**
**US-A- 4 543 649**     **US-A- 4 938 066**
**US-A- 5 104 144**     **US-A- 6 032 535**
**US-A- 6 109 598**

**Beschreibung**

Die Erfindung betrifft ein Kraftfahrzeug-Luftfeder system mit einer Ultraschall-Anordnung zur berührungslosen Abstandsmessung nach der Impuls/Echo-Methode, gemäß dem Oberbegriff des Anspruchs 1.

Eine Luftfeder besteht üblicherweise im wesentlichen aus einem Rollbalg, der "oben" mit einer Abdeckplatte und "unten" mit einem Abrollkolben abgeschlossen ist. Dabei ist die Abdeckplatte vorzugsweise chassisfest und der Abrollkolben achsfest angebracht.

Zur Bestimmung der Luftfederhöhe wird der variable lichte Abstand zwischen Abdeckplatte und Abrollkolben innerhalb der Luftfeder mit Hilfe von Ultraschall-Impulsen gemessen. Die meistverbreitete Methode ist die Impuls/Echo-Methode, wobei ein ultraschallsignal von einem am Deckel befestigten ultraschallwandler ausgestrahlt wird, dann von einem am Abrollkolben angebrachten Reflektor reflektiert und schließlich von einem am Deckel angeordneten Ultraschallwandler aufgenommen und zur Auswertung an eine Auswerteelektronik weitergeleitet wird.

Aus der Laufzeit des Ultraschallsignals berechnet sich bei Kenntnis der Schallgeschwindigkeit die vom Ultraschallsignal zurückgelegte Strecke und damit die Federhöhe.

Alternativ kann der Ultraschallwandler am Abrollkolben statt am Deckel angeordnet sein, wobei der diesbezügliche Reflektor am Deckel (statt am Abrollkolben) anzubringen wäre.

Die zur Berechnung der Strecke erforderliche Schallgeschwindigkeit ist temperaturabhängig. Um eine umständliche Temperaturkompensation bei der Bestimmung der Luftfederhöhe zu vermeiden, sind Messverfahren mit zusätzlicher Referenzstrecke vorgeschlagen worden.

Um eine Ausbreitung von Körperschall innerhalb der Luftfeder-Bauteile zu vermeiden, ist es erforderlich, den als Sender/-empfänger ausgebildeten ultraschallwandler mit einer elastischen bzw. gedämpften Aufhängung zu versehen. Dies hat zur Folge, dass der ultraschallwandler bei Druckerhöhung etwas zurückweicht, wodurch sich der Abstand zu dem gehäusefest angeordneten Referenzreflektor entsprechend vergrößert, was wiederum zur Folge hat, dass der Messwert verfälscht wird.

Die DE-OS 36 20 957 A1 beschreibt eine solche Luftfeder mit einem ultraschall-Impuls/Echo-System zur Höhenmessung. Um die Auswirkungen von Laufgeschwindigkeitsänderungen der Impulse (die durch Luftdruck-, Temperatur- und Feuchtigkeitsänderungen im Innern des Balges auftreten können) auszuschalten, wird ein zusätzliches Fest-Target, d. h. ein ortsfest vor dem Ultraschallsender angeordneter Reflektor in Form einer ebenen, an einem Stängel befestigten Metallscheibe, vorgeschlagen.

Hiermit ergeben sich verschiedene Nachteile: Das aus Stängel und Metallscheibe bestehende Fest-Target ist ein mechanisch empfindliches Bauteil. Da es eine gewisse Bauhöhe aufweist, verringert sich dadurch die lichte Höhe der Luftfeder und damit verringert sich auch der maximal mögliche Einfederungsweg. Andererseits vergrößert sich der für die Luftfeder erforderliche Bedarf an Bauhöhe. Ein weiterer Nachteil ist darin zu sehen, dass der Reflektor relativ nah am ultraschallsender angeordnet ist und dass damit das über den weiteren weg empfangene Nutzsignal von dem Referenzsignal möglicherweise bis zur Unkenntlichkeit überstrahlt wird.

Die DE 198 11 982 A1 beschreibt ebenfalls eine solche "Ultraschall-Luftfeder" und wird als nächster Stand der Technik angesehen. Auch hier kann die Temperaturabhängigkeit der schallgeschwindigkeit mit Hilfe eines Referenzreflektors herausgerechnet werden. Der Referenzreflektor befindet sich in Gestalt einer Reflektornase (34) an der Innenseite eines vor dem ultraschallwandler angeordneten Doms (32).

Durch die Höhe des Doms (32) vergrößert sich auch hier der für die Luftfeder erforderliche Bedarf an Bauhöhe, bzw. es verringert sich die lichte Höhe der Luftfeder und damit der maximal mögliche Einfederungsweg. Auch hier besteht die Gefahr, dass das Referenzsignal das über den weiteren weg empfangene Nutzsignal bis zur unkenntlichkeit überstrahlt.

Die vorliegende Erfindung will hier Abhilfe schaffen.

Gemäß US 5,104,144 wird das Problem der überstrahlung eines Nutzsignals durch ein Referenzsignal dadurch gelöst, dass bei einer Höhenmessung innerhalb eines Stoßdämpfers mit Hilfe der Impuls/Echo-Methode der abstandsvariabel zum ultraschall-wandler angeordnete Reflektor zweistufig ausgebildet ist, wobei sich die Reflektorflächen jeweils senkrecht zur Zylinder-Achse erstrecken.

Da bei Kolben/Zylinder-Stoßdämpfern eine axiale zwangsführung gegeben ist, bei Luftfedern jedoch eine schwenkbewegung oder sogar eine gewisse Torkelbewegung möglich ist, lassen sich die Konstruktionsmerkmale zur Höhenmessung, wie sie in der US 5,104,144 geoffenbart sind, nicht auf die Verhältnisse einer ultraschall-Luftfeder übertragen.

Die mit Anspruch 1 umrissene Lösung der gestellten Aufgabe besteht im Prinzip darin, dass die Referenzstrecke einer "ultraschall-Luftfeder" nicht relativ ortsfest zum Sender sondern ähnlich wie bei dem genannten Stoßdämpfer ebenfalls relativ ortsfest zum Reflektor konzipiert wird. Dabei ist nun die zweite Stufe einfach als zentrale Sackbohrung realisiert.

Die mit der Erfindung erzielbaren Vorteile bestehen in einem Wegfall eines am Sensor anzuordnenden Referenzreflektors, einer allgemeinen Vereinfachung der Konstruktion und einer Einsparung von Bauraum.

Von großer Bedeutung ist die Sicherheit bei der Auswertung. Ein Referenzreflektor in kurzem Abstand vor dem Schallwandler erzeugt in jedem Fall ein Echo. Dies ist unter Umständen so stark, dass es die Elektronik übersteuert, so dass im Einzelfall ein Echo aus größerer Entfernung nicht erkannt wird. Durch die Verwendung des erfindungsgemäß zweistufigen Reflektors haben Mess- und Referenzsignal vergleichbar große Amplituden, so dass diesbezügliche Messschwierigkeiten entfallen. Wenn das Referenz- und das Zielecho etwa gleichstark sind, erhöht dies die Sicherheit bei der Auswertung der Laufzeiten. Es genügt eine einzige Aussteuerungsautomatik.

Durch die erfindungsgemäße Ausgestaltung des zweistufigen Reflektors werden auch bei relativen schwenk- oder sogar Torkelbewegungen stets zuverlässig etwa gleichstark reflektierte ziel- und Reflektor-Impulse empfangen.

Bei durchgeführten versuchen hat sich gezeigt, dass eine Sackbohrung mit einem Durchmesser von 12 mm und einer Tiefe von 7,5 mm - auch bei schiefwinklig orientierter Reflektorkomponente - zuverlässig reproduzierbare Ergebnisse liefert.

Eine weitere Ausgestaltung der Erfindung sieht vor, den üblicherweise am Abrollkolben befindlichen Anschlagpuffer als zweistufigen zielreflektor auszubilden. Durch einen derartigen Aufbau geht kein Bauraum ungenutzt "verloren".

Vorzugsweise befindet sich die Sende/Empfangseinheit am Luftfederdeckel, d. h. sie ist vorzugsweise chassisfest, und der zweistufige Zielreflektor befindet sich am Abrollkolben. Auf diese weise vereinfacht sich die verbindung der sende/Empfangseinheit mit dem zugehörigen Elektronikbaustein.

Ist die Sende/Empfangskomponente außermittig auf dem Deckel angeordnet (z. B. aus Rücksicht auf einen mittig angeordneten Träger), so kann selbstverständlich auch der zweistufige Zielreflektor außermittig oder schräg in Richtung auf die Sende/Empfangs-Komponente auf (bzw. in) dem Anschlagpuffer angeordnet sein.

Im folgenden wird die erfindungsgemäße Ultraschall-Messanordnung des Kraftfahrzeug-Luftfedersystems anhand der beigefügten Abbildungen näher beschrieben. Es zeigt:

Fig. 1a eine mit einem erfindungsgemäßen Messsystem versehene Luftfeder im Längsschnitt;
Fig. 1b eine gemäß dem Stand der Technik mit einem Messsystem versehene Luftfeder, ebenfalls im Längsschnitt;
Fig. 2 die Prinzipdarstellung der Messanordnung mit ultraschallwandler und zweistufigem Reflektor;
Fig. 3 eine Kombination Schallwandler mit Referenzreflektor herkömmlicher Bauart, im Längsschnitt;
Fig. 4 eine spezielle Ausführungsform des erfindungsgemäßen Reflektors, im Längsschnitt;
Fig. 5 ein Oszillogramm des erfindungsgemäßen Echosignals; und
Fig. 6 einen Ausschnitt aus dem Oszillogramm.

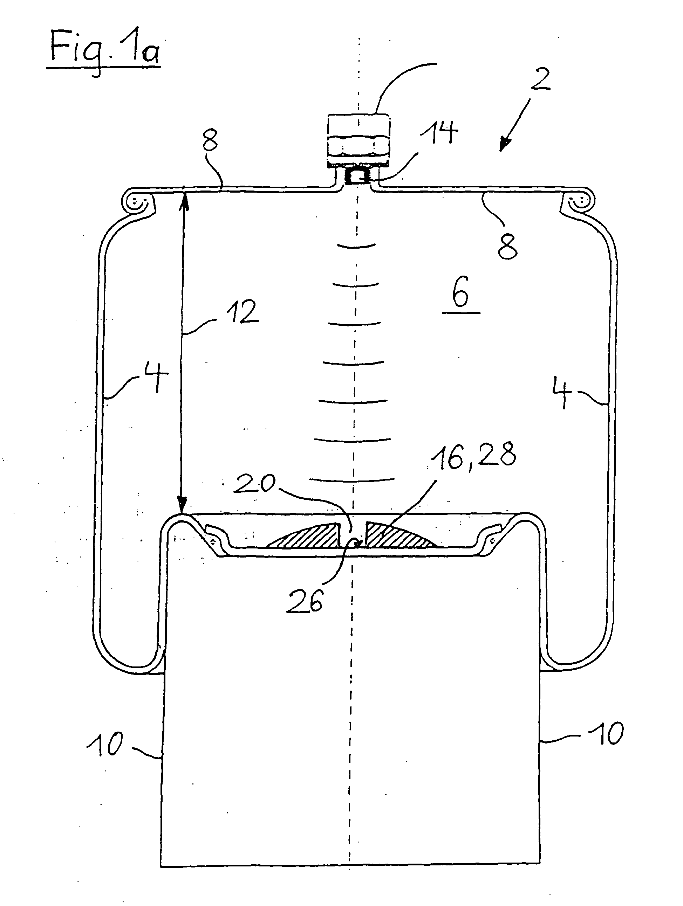

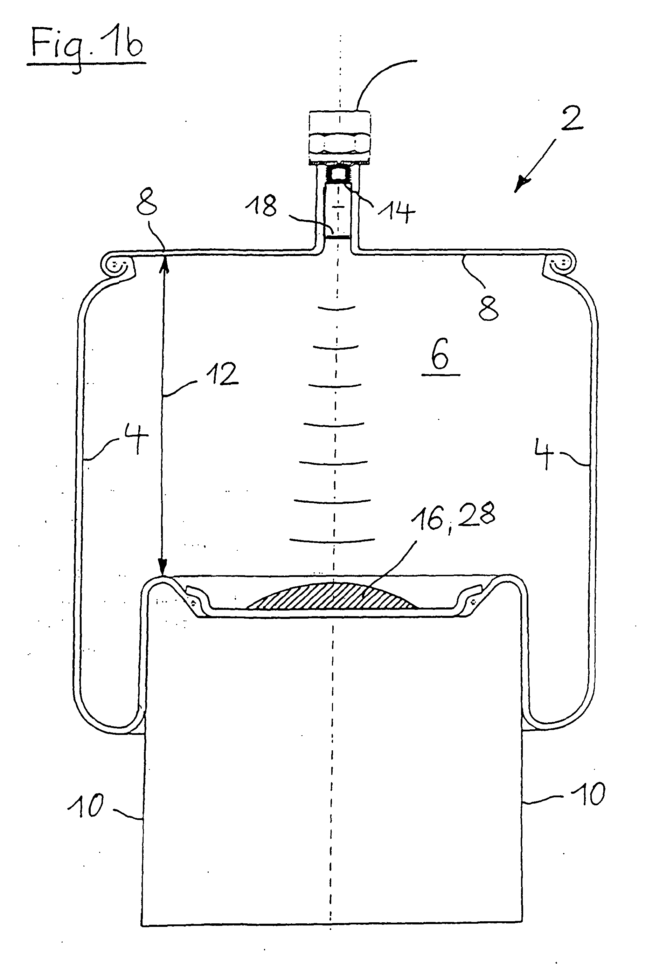

Die in Fig. 1a/1b dargestellte Luftfeder 2 besteht im wesentlichen aus einem Luftfeder-Rollbalg 4, der den unter Druck stehenden Luftfeder-Innenraum 6 umschließt. Chassisseitig ist der Rollbalg 4 durch eine Abdeckplatte 8 verschlossen. Am gegenüberliegenden Ende kann der Rollbalg 4 auf einem radseitig befestigten Abrollkolben 10 im Rhythmus des Einfederungsvorgangs abrollen.
Zwecks Messung der lichten Federhöhe 12 ist an der Abdeckplatte 8 ein als Sender/Empfänger dienender Ultraschallwandler 14 angebracht. Diesem Sender/Empfänger 14 steht ein am Abrollkolben 10 befestigter Reflektor 16 gegenüber.

Der Ultraschallwandler 14 sendet in zeitlichen Abständen einzelne Ultraschall-Impulse aus, die die lichte Höhe 12 des Luftfederinnenraums durchlaufen und - nachdem sie von dem Reflektor 1b reflektiert worden sind - an den nun als Empfänger dienenden Ultraschall-Wandler 14 zurückkehren. Wie eingangs erwähnt, wird aus der Laufzeit des jeweiligen Ultraschall-Impulses die momentane lichte Federhöhe 12 bestimmt. Dabei ist die Zeit zwischen dem Aussenden des Impulses und dem Empfang des Echos ein Maß für die Federhöhe.

Die Laufzeit eines Impulses ist abhängig von der Geschwindigkeit c, mit der sich der Schall in der Luftfeder ausbreitet, und diese hängt wiederum von der Temperatur und der Dichte der Luft ab.

Um diese Einflüsse auf das Ergebnis der Laufzeitmessung zu eliminieren, wird gemäß dem Stand der Technik (Fig. 1b) in definierter Distanz von dem Schallsender/-empfänger 14 ein Referenzreflektor 18 eingeführt. Die messbare Laufzeit des Referenzsignals beträgt:

$$(I) \qquad t_{ref} = 2 \cdot s_{ref}/c.$$

Für die Laufzeit zum Zielreflektor 16 gilt entsprechend:

$$(II) \qquad t_{ziel} = 2 \cdot s_{ziel}/c.$$

Das Messergebnis ergibt sich aus dem Verhältnis der Laufzeiten, so dass sich die Ausbreitungsgeschwindigkeit und der Faktor 2 herauskürzen:

$$(III) \qquad s_{ziel} = s_{ref} \cdot t_{ziel}/t_{ref}.$$

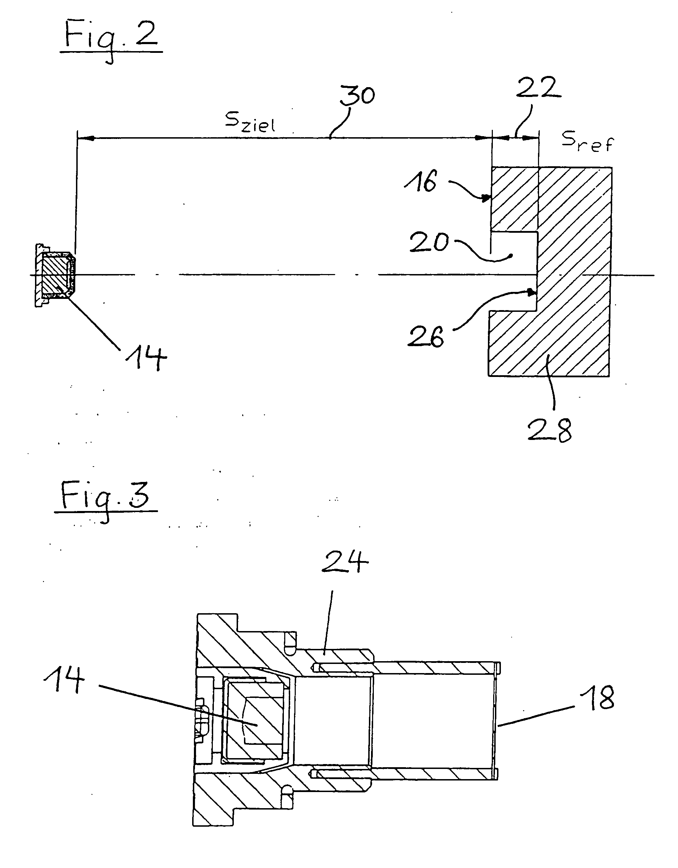

Bisher wird der Referenzreflektor 18 in axialer Strahlungsrichtung unmittelbar vor dem Schalluandler 14 angeordnet. Die Fig. 1b und 3 zeigen eine solche Baueinheit, bei dem ein Referenzreflektor 18 in unmittelbarer Nähe zum Schallwandler 14 positioniert ist.

Bei dem mit Fig. 1a und 2 vorgestellten Prinzip zur Messung der Referenzsignals wird erfindungsgemäß in den Zielreflektor 16 eine Vertiefung 20 eingebracht, deren Tiefe 22 als Referenzstrecke dient. Dadurch entfällt der filigrane und aufwendige Referenzreflektor 18 (Fig. 1b und 3), so dass das Gehäuse des Höhensensors 24 entsprechend kürzer gestaltet werden kann.

Für die Laufzeit des Schallimpulses zum Zielreflektor 16 und zurück gilt Gleichung (I). Die Laufzeit des Referenzechos aus dem Boden 26 der Vertiefung 20 beträgt:

$$(IV) \qquad t_{ref} = 2 \cdot (s_{ziel} + s_{ref})/c.$$

Aus den Gleichungen (I) und (IV) ergibt sich der Abstand 16 zum Zielreflektor 16 in Abhängigkeit der messbaren Laufzeiten:

$$(V) \qquad s_{ziel} = t_{ziel} \cdot s_{ref}/(t_{ref} - t_{ziel}).$$

Um die grundsätzliche Funktion der erfindungsgemäßen Anordnung zu prüfen, wird ein serienmäßiger Anschlagpuffer 28 mit einer zentralen Sackbohrung 20 versehen (Durchmesser: 12 mm, Tiefe (22) 7,5 mm). In 180 mm Abstand 30 befindet sich ein Ultraschallwandler 14 mit einer Ansteuerungs- und Auswerteschaltung.

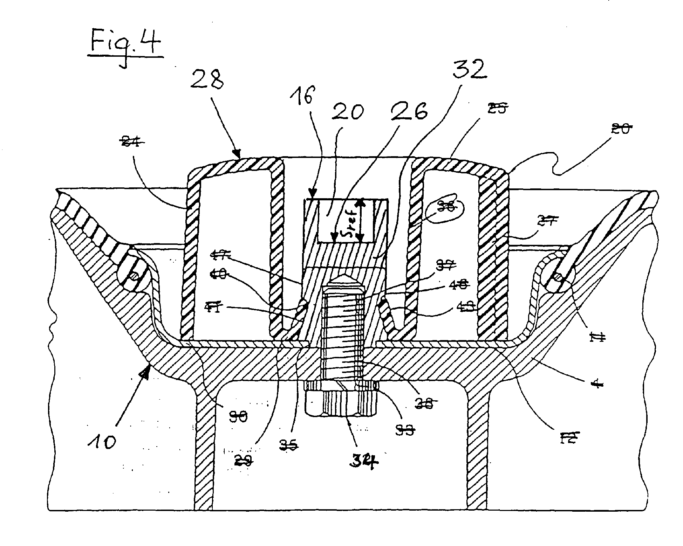

Die Fig. 4 zeigt ein konkretes Ausführungsbeispiel eines Anschlagpuffers 28 mit integrierter Reflektoreinheit 32. Diese Reflektoreinheit 32 besteht aus einem Metall- oder Kunststoff-Zylinder, der mit Hilfe einer Schraube 34 auf dem Abrollkolben 10 befestigt ist.

In Richtung auf den Ultraschallwandler 14 weist die Reflektoreinheit 32 eine Sackbohrung 20 auf, wobei der obere Rand als Zielreflektor 16 und der Boden 26 der Vertiefung 20 als Referenzreflektor dient.

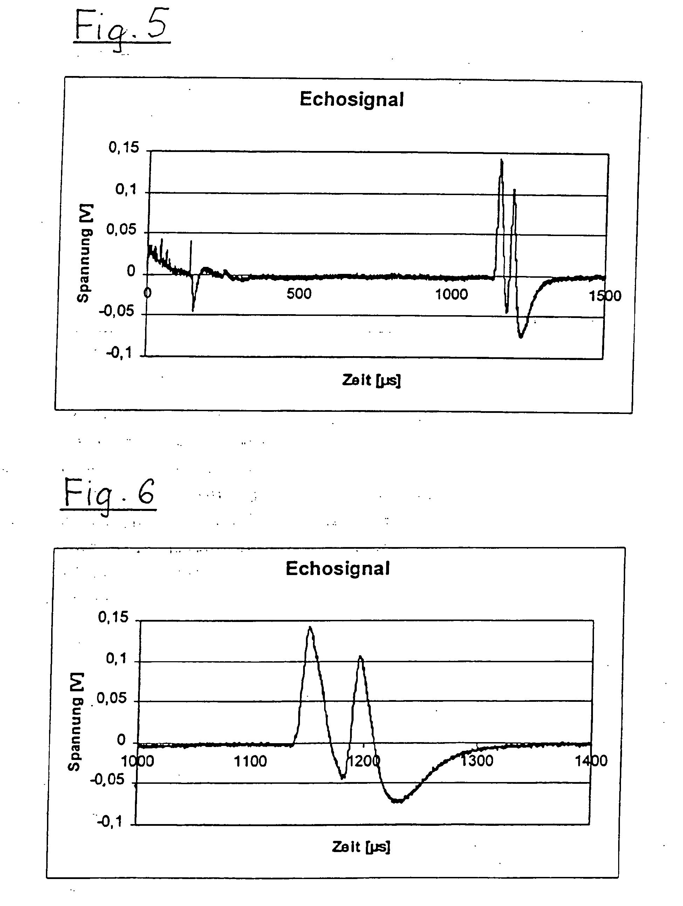

Die Fig. 5 zeigt das Oszillogramm des Echosignals. Das Doppelecho, das von dem modifizierten Puffer 28 erzeugt wird, ist deutlich zu erkennen. Das erste Teilecho trifft nach der Zeit $t_{ziel}$ ein und das zweite nach $t_{ref}$. Der zeitliche Abstand der beiden Echos entspricht der Tiefe 22 der Sackbohrung 20.

Die Fig. 6 zeigt das elektrische Signal des Doppelechos in zeitlich gedehnter Darstellung. Der Impuls, der die größere Strecke zurückgelegt hat (hier das Referenzsignal), erzeugt ein kleineres Echosignal.

**Bezugszeichenliste**

2     Luftfeder
4     Luftfeder-Rollbalg, Rollbalg
6     Luftfeder-Innenraum
8     Abdeckplatte (Anschlussteil)
10    Abrollkolben (Anschlussteil)
12    lichte Federhöhe
14    Ultraschallwandler (Sender/Empfänger)
16    Reflektor (Zielreflektor)
18    Referenzreflektor

20 Vertiefung, Sackbohrung, Stufe
22 Tiefe, Referenzstrecke
24 Gehäuse des Höhensensors
26 Boden der Vertiefung 20, Referenzreflektor
28 Anschlagpuffer, modifizierter Puffer
30 Abstand Schallwandler/Zielreflektor
32 Reflektoreinheit
34 Schraube

## Patentansprüche

1. Kraftfahrzeug-Luftfedersystem mit einer Ultraschall-Anordnung zur berührungslosen Abstandsmessung nach der Impuls/Echo-Methode,
   wobei die Luftfeder (2) im wesentlichen aus einem Rollbalg (4) besteht, der an seinem einen Ende mit einer Abdeckplatte (8) als einem Anschlussteil und der an seinem anderen Ende mit einem Abrollkolben (10) als zweitem Anschlussteil abgeschlossen ist,
   und wobei an einem (8 bzw. 10) der beiden Anschlussteile (8, 10) ein ultraschall-Sender/-empfänger (14) und am anderen (10 bzw. 8) der beiden Anschlussteile ein Reflektor (16) mit konvexer Reflektoroberfläche angeordnet ist,
   **dadurch gekennzeichnet,**
   **dass** der Reflektor zweistufig ausgebildet ist,
   wobei die eine Stufe als Zielreflektor (16) und die andere Stufe (26), die als zentrale sackbohrung (20) realisiert ist, als Referenzreflektor dient.

2. Kraftfahrzeug-Luftfedersystem nach Anspruch 1,
   **dadurch gekennzeichnet,**
   **dass** der Durchmesser der Sackbohrung (20) ca. 12 mm und die Tiefe (22) ca. 7,5 mm beträgt.

3. Kraftfahrzeug-Luftfedersystem nach Anspruch 1 oder 2,
   **dadurch gekennzeichnet,**
   **dass** auf dem dem Luftfederinnenraum (6) zugewandten Ende des Abrollkolbens (10) oder auf der dem Luftfederinnenraum (6) zugewandten Seite der Abdeckplatte (8) ein Anschlagpuffer (28) angeordnet ist,
   wobei der Anschlagpuffer (28) als zweistufiger zielreflektor (16) ausgebildet ist.

4. Kraftfahrzeug-Luftfedersystem nach einem der Ansprüche 1 bis 3,
   **dadurch gekennzeichnet,**

   - **dass** der sender/-empfänger (14) auf der dem Luftfederinnenraum (6) zugewandten Seite der Abdeckplatte (8), und
   - **dass** der zweistufige Reflektor (16) auf dem dem Luftfederinnenraum (6) zugewandten Ende des Abrollkolbens (10) angebracht ist.

5. Kraftfahrzeug-Luftfedrsystem nach einem der Ansprüche 1 bis 4,
   **dadurch gekennzeichnet,**

   - **dass** der Sender/-empfänger (14) außermittig auf der Abdeckplatte (8) angeordnet ist, und
   - **dass** der zweistufige Reflektor (16) außermittig oder schräg in Richtung auf den Sender/-empfänger (14) auf oder in dem Abrollkolben (10) angebracht ist.

## Claims

1. Vehicle air suspension system with an ultrasound measuring arrangement for contactless distance measurement by the pulse/echo method, the air spring (2) substantially comprising a roll bellows (4), which is terminated at its one end by a cover plate (8) as a connection part and is terminated at its other end by a rolling piston (10) as a second connection part, and an ultrasound transmitter/receiver (14) being arranged on one (8 or 10) of the two connection parts (8, 10) and a reflector (16) with a convex reflector surface being arranged on the other (10 or 8) of the two connection parts, **characterized in that** the reflector is formed in two stages, one stage taking the form of a target reflector (16) and the other stage (26), which takes the form of a central blind hole (20), serving as a reference reflector.

2. Vehicle air suspension system according to Claim 1, **characterized in that** the diameter of the blind hole (20) is approx. 12 mm and the depth (22) is approx. 7.5 mm.

3. Vehicle air suspension system according to Claim 1 or 2, **characterized in that** a stop buffer (28) is arranged on the end of the rolling piston (10) facing the air spring inner space (6) or on the side of the cover plate (8) facing the air spring inner space (6), the stop buffer (28) being formed as a two-stage target reflector (16).

4. Vehicle air suspension system according to one of Claims 1 to 3, **characterized in that** the transmitter/receiver (14) is mounted on the side of the cover plate (8) facing the air spring inner space (6), and **in that** the two-stage reflector (16) is mounted on the end of the rolling piston (10) facing the air spring inner space (6).

5. Vehicle air suspension system according to one of Claims 1 to 4, **characterized in that** the transmitter/receiver (14) is arranged off-centre on the cover plate (8), and **in that** the two-stage reflector (16) is mounted off-centre or at an angle in the direction of the transmitter/receiver (14) on or in the rolling piston (10).


**Revendications**

1. Système d'amortisseur pneumatique pour véhicule automobile comprenant un arrangement à ultrasons pour une mesure de distance sans contact selon le procédé impulsion/écho, l'amortisseur pneumatique (2) étant pour l'essentiel composé d'un soufflet (4) qui est fermé à l'une de ses extrémités par une plaque de recouvrement (8) comme premier élément de raccordement et à l'autre extrémité par un piston de déroulage (10) comme deuxième élément de raccordement et un émetteur/récepteur d'ultrasons (14) étant disposé sur l'un (8 ou 10) des deux éléments de raccordement (8, 10) et un réflecteur (16) qui présente une surface de réflexion convexe sur l'autre (10 ou 8) des deux éléments de raccordement, **caractérisé en ce que** le réflecteur est configuré avec deux étages, l'un des étages étant réalisé sous la forme d'un réflecteur cible (16) et l'autre étage (26), qui est réalisé sous la forme d'un trou borgne central (20), servant de réflecteur de référence.

2. Système d'amortisseur pneumatique pour véhicule automobile selon la revendication 1, **caractérisé en ce que** le diamètre du trou borgne (20) est d'environ 12 mm et sa profondeur (22) d'environ 7,5 mm.

3. Système d'amortisseur pneumatique pour véhicule automobile selon la revendication 1 ou 2, **caractérisé en ce que** sur l'extrémité du piston de déroulage (10) qui fait face à l'espace intérieur de l'amortisseur pneumatique (6) ou sur le côté de la plaque de recouvrement (8) qui fait face à l'espace intérieur de l'amortisseur pneumatique (6) est disposé un tampon de butée (28), le tampon de butée (28) étant réalisé sous la forme d'un réflecteur cible (16) à deux étages.

4. Système d'amortisseur pneumatique pour véhicule automobile selon l'une des revendications 1 à 3, **caractérisé en ce que** l'émetteur/récepteur (14) est monté sur le côté de la plaque de recouvrement (8) qui fait face à l'espace intérieur de l'amortisseur pneumatique (6) et que le réflecteur à deux étages (16) est disposé sur l'extrémité du piston de déroulage (10) qui fait face à l'espace intérieur de l'amortisseur pneumatique (6).

5. Système d'amortisseur pneumatique pour véhicule automobile selon l'une des revendications 1 à 4, **caractérisé en ce que** l'émetteur/récepteur (14) est monté de manière excentrée sur la plaque de recouvrement (8) et que le réflecteur à deux étages (16) est monté de manière excentrique ou en biais en direction de l'émetteur/récepteur (14) sur ou dans le piston de déroulage (10).

# Fig. 1a

Fig. 1b

Fig. 2

$S_{ziel}$    30    22    $S_{ref}$

16

20

14

26

28

Fig. 3

24

14

18

# Fig.4

Fig. 5

Echosignal

Fig. 6

Echosignal